# EUROPEAN PATENT SPECIFICATION

(11) **EP 3 108 611 B1**
(45) Date of publication and mention of the grant of the patent: **01.08.2018**
(21) Application number: 15707581.3
(22) Date of filing: 20.02.2015
(51) Int. Cl.: H04L 9/32, G09C 1/00

(54) **PHYSICAL UNCLONEABLE FUNCTION BASED ANTI-COUNTERFEITING SYSTEM**
PHYSIKALISCH UNKLONBARES FUNKTIONSBASIERTES FÄLSCHUNGSSCHUTZSYSTEM
SYSTÈME ANTI-CONTREFAÇON BASÉ SUR UNE FONCTION PHYSIQUE QUI NE PEUT PAS ÊTRE CLONÉE

(30) Priority: 21.02.2014 EP 14156230
(43) Date of publication of application: 28.12.2016
(73) Proprietor: The European Union, represented by the European Commission, 1049 Brussels (BE)
(72) Inventor: BALDINI, Gianmarco, I-21027 Varese (IT); SANCHEZ MARTIN, Jose Ignacio, I-21027 Varese (IT); NAI FOVINO, Igor, 21040 Castronno (IT)
(74) Representative: Gevers Patents
(86) International application number: PCT/EP2015/053667
(87) International publication number: WO 2015/124752

(56) References cited:
- WO-A1-2008/068644
- WO-A1-2008/152564
- WO-A2-2007/031908
- KATZENBEISSER STEFAN ET AL ABDELZAHER TAREK ZAHERIOTALLINOIS EDU UNIVERSITY OF ILLINOIS AT URBANA CHAMPAIGN DEPARTMENT OF COMPUTER: "Recyclable PUFs: Logically Reconfigurable PUFs", 28 September 2011 (2011-09-28), ADVANCES IN COMMUNICATION NETWORKING : 20TH EUNICE/IFIP EG 6.2, 6.6 INTERNATIONAL WORKSHOP, RENNES, FRANCE, SEPTEMBER 1-5, 2014, REVISED SELECTED PAPERS; [LECTURE NOTES IN COMPUTER SCIENCE , ISSN 1611-3349], SPRINGER VERLAG, DE, PAGE(S) 374 - 389, XP047303336, ISSN: 0302-9743 paragraph [0003] - paragraph [0005] paragraph [0007]
- YINGJIE LAO ET AL: "Reconfigurable architectures for silicon Physical Unclonable Functions", ELECTRO/INFORMATION TECHNOLOGY (EIT), 2011 IEEE INTERNATIONAL CONFERENCE ON, IEEE, 15 May 2011 (2011-05-15), pages 1-7, XP032009623, DOI: 10.1109/EIT.2011.5978614 ISBN: 978-1-61284-465-7
- JENG A B ET AL: "Survey and remedy of the technologies used for RFID tags against counterfeiting", MACHINE LEARNING AND CYBERNETICS, 2009 INTERNATIONAL CONFERENCE ON, IEEE, PISCATAWAY, NJ, USA, 12 July 2009 (2009-07-12), pages 2975-2981, XP031518171, ISBN: 978-1-4244-3702-3

## Description

### Technical field

The present invention relates to a device and method useful in the context of identifying genuine or counterfeited goods on the basis of what is known as Physical(ly) Unclonable Function (PUF).

### Background Art

Counterfeiting of goods is a serious threat to various industries including in particular pharmaceuticals, medical devices and luxury goods. It is to be noted that the threat is not only economical, but may have farther reaching consequences on human and animal health and welfare.

Various anti-counterfeiting solutions have been proposed in the past. They include specific packaging technologies, like holograms, special inks, barcodes, chemical markers, as well as the Radio Frequency Identification (RFID) technology. The general idea of all these anti-counterfeiting techniques is to identify a good of a certain type, preferably however as a unique good different from any other good, even of the same type and even if produced by the same process within the same production facility by the same manufacturer.

One of the more recent approaches relates to the concept of Physical(ly) Unclonable Function (PUF) and its use as an anti-counterfeiting instrument. A PUF can be defined as a function that is embodied within the very physical structure of a good, which function can be easily evaluated, but is difficult to predict. This latter property is supposed to render the good unique and thus unclonable.

The evaluation of a PUF is based on a challenge and a corresponding response, which form the so-called Challenge-Response Pair (CRP). The response to a particular challenge is always the same (albeit within a certain error range due to environmental influences) for a determined good, but is different even from identical(ly produced) goods. If the response to the particular challenge is that expected from the CRP previously determined e.g. by the manufacturer, the good can be positively identified as being genuine or authentic.

However, as a CRP is statically developed by the manufacturer for both the PUF and the reader units, the security of the overall system relies on the assumption that the response cannot be cloned. In fact, although a priory the PUF suggests that it is unclonable, successful cloning has been reported (Katzenbeisser Stefan, et al., "PUFs: Myth, Fact or Busted? A Security Evaluation of Physically Unclonable Functions (PUFs) Cast in Silicon", CHES 2012, 14th International Workshop, Leuven, Belgium. September 9-12, 2012).

Furthermore, the security provided by the concept of PUFs must be based on the unpredictability of responses to new challenges. Again, if the unpredictability of a PUF is not guaranteed, cloning becomes possible, which will make unusable the PUFs already deployed and the physical devices generating the Challenges and evaluating the responses.

Hence, despite the suggestive name, a PUF based anti-counterfeiting method remains subject to cloning attacks, hereby a resilient secure solution cannot be based on the assumption of the unclonability of a certain CRP.

WO2007031908A2 discloses physical uncloneable function (PUF) devices for determining authenticity of an item, systems for determining authenticity of a physical item, and methods for determining authenticity of an item. A PUF pattern of the PUF device is damaged when using the item for the first time. By combining an RFID arrangement with a PUF arrangement, a system for wireless identification and verification of authenticity is achieved. The PUF device may be in the form of a label, and includes a volatile memory and a non-volatile memory, wherein the volatile memory may be used for temporary storing of a PUF pattern and the non-volatile memory may be used for storing software instructions and data for identification purposes.

WO2008068644A1 discloses a method for controlling data access to and from an RFID device. Thereby, an RFID reading device authenticates itself to the RFID device before the RFID device (230) communicates with the RFID reading device. The RFID device (230) is equipped with a physically uncloneable function, which is adapted to produce a unique but unpredictable response signal (RI, R2) upon receiving a predefined challenging signal (CI, C2). During an enrolment of the RFID device a first response signal (RI) being uniquely associated with a first challenging signal (CI) is stored in a memory of the RFID device (230). The first challenging signal (CI) represents a password for opening further data communication with the RFID device.

KATZENBEISSER STEFAN ET AL ABDELZAHER TAREK ZAHERIOTALLINOIS EDU UNIVERSITY OF ILLINOIS AT URBANA CHAMPAIGN DEPARTMENT OF COMPUTER: "Recyclable PUFs: Logically Reconfigurable PUFs", 28 September 2011 (2011-09-28), ADVANCES IN COMMUNICATION NETWORKING : 20TH EUNICE/IFIP EG 6.2, 6.6 INTERNATIONAL WORKSHOP, RENNES, FRANCE, SEPTEMBER 1-5, 2014, REVISED SELECTED PAPERS; [LECTURE NOTES IN COMPUTER SCIENCE , ISSN 1611-3349], SPRINGER VERLAG, DE, PAGE(S) 374 - 389, XP047303336, ISSN: 0302-9743, discloses the concept of Logically Reconfigurable Physical Unclonable Functions (LR-PUFs), which can be dynamically 'reconfigured' after deployment such that their challenge/response behavior changes in a random manner. The proposal uses a stateful control logic that transforms challenges and responses of the PUF.

YINGJIE LAO ET AL: "Reconfigurable architectures for silicon Physical Unclonable Functions", ELECTRO/INFORMATION TECHNOLOGY (EIT), 2011 IEEE INTERNATIONAL CONFERENCE ON, IEEE, 15 May 2011 (2011-05-15), pages 1-7, XP032009623, DOI: 10.1109/EIT.2011.5978614 ISBN: 978-1-61284-465-7, discloses Reconfigurable Architectures for Silicon Physical Unclonable Functions, based on non-FPGA reconfigurable silicon PUFs.

WO2008152564A1 discloses an electronic device, comprising a physical uncloneable function (PUF) module, and circuitry adapted to receive a cryptographic query (a) from an electronic unit, read, from the PUF module, data generated at a challenge of the PUF module, and generate a cryptographic response (ss) based on the data, a random noise component comprised in the data, and the cryptographic query (a), thereby enabling authentication of the electronic device (102).

JENG A B ET AL: "Survey and remedy of the technologies used for RFID tags against counterfeiting", MACHINE LEARNING AND CYBERNETICS, 2009 INTERNATIONAL CONFERENCE ON, IEEE, PISCATAWAY, NJ, USA, 12 July 2009 (2009-07-12), pages 2975-2981, XP031518171, ISBN: 978-1-4244-3702-3 provides a survey of the technologies used for RFID tags against counterfeiting, and investigates how an RFID-tag can be made unclonable. The authors compare pros and cons of existing methods and identify areas which require further enhancement, as well as proposing some design principles and guidelines for improvement of the existing methods.

### Technical problem

It is therefore an object of the present invention to provide a more robust and flexible method and corresponding devices for allowing to positively or unambiguously identify a good either as genuine or as counterfeited, even if a PUF based identifying CRP has become unusable (because it has been successfully cloned).

### General Description of the Invention

In order to overcome at least part of the above-mentioned problems, the present invention proposes, in a first aspect, a device (also called reader herein) for identifying genuine and counterfeited goods using challenge-response pairs (CRP) based on physical unclonable function (PUF). Said device comprises one or more antennae for emitting a number of first electromagnetic signals as challenges to a good embodying a PUF and for receiving a number of second electromagnetic signals as responses from the good embodying the PUF, each couple of challenge and corresponding response forming a challenge-response pair. The device further comprises a software defined radio (SDR) unit and at least one of the antennae is a wideband antenna. The wideband antenna can operate in various frequency bands. An example is the SATIMO SH400, which operates in the 0.4 - 6 GHz frequency band. Furthermore, said software defined radio (SDR) unit, which can receive and transmit in various different radio technologies in different frequencies, is arranged for emitting said first electromagnetic signal(s) as challenge(s) and arranged for receiving said second electromagnetic signal(s) as response(s) and a challenge-response pair evaluation unit for analysing said challenge-response pair(s) and to provide a result acknowledging if the good is genuine or counterfeit. Furthermore, the device is configurable with updated challenge-response pairs, i.e. it has means to allow the storing and implementation of new CRPs at any time without the need of replacing the device in case of security breach of the former PUFs. Hence, the invention allows exploiting the unpredictability of new CRPs for already deployed PUFs, and allows quick recovery and mitigation of clonability breaches in an agile and cost effective way.

Goods or goods embodying a PUF in the context of the invention are so-called PUF enabled (or embedded) goods or PUF equipped goods, i.e. goods which intrinsically integrate a PUF or goods which have been modified to comprise a PUF. Furthermore, the invention focusses on radio frequency (RF) challenge of a PUF. Examples of PUF enabled goods are typically goods comprising a physical microstructure depending on physical factors introduced during manufacture which are unpredictable, such as integrated circuits, e.g. electronic devices in general, computer chips and processors, ..., RFIDs, etc. One example of the application of PUF is to enhance the security of Smart Cards, where the internal memory of the Smart Card can be used for the PUF (for example Smartcards by NXP at www.nxp.com). However, the possibility is not excluded that a good can also be equipped with a tag or a label, which embody a PUF, and are provided on or in the good itself.

The device of the present invention allows identifying genuine and counterfeited goods provided the goods intrinsically integrate a PUF or if goods are equipped with a physical structure embodying a PUF. The device in the present invention is therefore highly flexible, meaning that it can verify the authenticity of different kinds of goods having different embodying PUFs, like an intrinsically integrated PUF and/or a tag embodying a PUF, etc.

In the context of the present invention, a software defined radio (SDR) is a system composed by a radio frequency (RF) front-end with both an analogue-to-digital and a digital-to-analogue converter, as well as a general-purpose processor complemented with a digital signal processor (DSP) or a field programmable gate array (FPGA). The signal processing for radio communication is executed in a general-purpose processor rather than being done in special-purpose hardware. The first major benefit of the use of SDR in comparison to a conventional radio is that an SDR can receive and transmit in various different radio technologies in different frequencies based solely on the software installed and activated on the SDR (i.e. the waveform). In this way, a device based on SDR technology can be dynamically configured with new waveforms, implementing new wireless standards or new modulation schemes to generate challenges. Hence, the proposed solution allows exploiting the flexibility of SDR technology to improve and strengthen the robustness of PUF technologies. In this way, the potential space of the CRP is significantly enhanced in comparison to special purpose hardware. A second major benefit is when the unclonability of a PUF is breached. Special-purpose hardware devices (e.g. to generate the challenges) already deployed in the market must currently be physically replaced if there is a breach. This may imply significant costs for product recall. A device to generate the challenges and based on SDR technology can be dynamically configured with new waveforms to generate new challenges against the already deployed PUF. These new challenges cannot be replicated by the cloned PUFs. In this way, both the recalls for the PUF based goods and the devices to generate challenges are not required to respond effectively and cost efficiently to the breach.

In a preferred embodiment, the first electromagnetic signal(s) are generated by the PUF in the good on the basis of the challenge generated by the reader device based on SDR technology. The implementation of the CRP can be based on sophisticated algorithms, which can be based on various parameters, such as different frequencies, modulations, amplitudes, the duration, etc. of the first electromagnetic signal(s) to be produced as an output by the PUF with the purpose to check the authenticity of the good. With the term algorithm we intend a step-by-step finite list of operations, which can be implemented with one complex electromagnetic signal or a set of signals, which collectively produce the CRP. These algorithms, as well as the firmware/software for the software defined radio or any other information needed within the device, in particular for keeping the device up to date, should be easily transferrable into the device, preferably at any time such a transfer is desirable or required (i.e. after the manufacturing of the device). Hence, the device is preferably connectable, be it by wire or wirelessly, to a unit, e.g. a server, capable of providing updated software, algorithms, etc. Advantageously, in an additional embodiment, the device further comprises means for wireless communication with a remote update server for updating the software of the software defined radio and/or programmable PUF algorithms and/or challenge-response pair authentication information. The wireless communication can be of any appropriate standard, such as Bluetooth, wireless LAN (e.g. WiFi), 3G (e.g. UMTS), 4G (e.g. LTE), etc. or even proprietary.

In a particularly preferred embodiment, the device is arranged for a centralised mode, wherein the challenge-response pair evaluation unit delegates (part of) the evaluation of the challenge-response pair(s) to a remote authentication server based on challenge-response pair authentication information stored on said remote authentication server. In such a case, the challenge-response pair authentication information does not need to be downloaded to the device and thus cannot easily be inspected and reverse-engineered by an ill-intentioned user. This way of evaluating the authenticity is thus particularly secure if, of course, the communication between the device and the remote server is kept secure. An advantage of such an embodiment enables a manufacturer to keep the response signal or signals secret, instead of transmitting the response to the device, thus making a security breach or cloning even more difficult.

Alternatively, the device is arranged for decentralised authentication mode and the challenge-response pair evaluation unit effects the evaluation of the challenge-response pair(s) based on authentication information stored within the device. The advantage of this option is that there is no need for permanent connection, i.e. the device could be used even in places where (wireless) communication with the remote authentication server would be difficult or even impossible. In the decentralized authentication mode, the device is able to work offline, but it would also be possible to set the device online from time to time if updates were to be made. The device would be connected to a centralized server where the updates are accessible.

It is to be noted that both centralised and decentralised modes may be combined e.g. for allowing the use of the device even in cases where communication to a remote server is impossible or unreliable or e.g. to keep certain challenge-response pairs within the control of the authentication authority/manufacturer (and to potentially release them for decentralised use only later if need be or if desired).

The device preferably further comprises evaluation notification means (or more simply signalisation means) for notifying the result provided by challenge-response pair evaluation unit. Such signalisation means may be means as simple as a LED, preferably however the signalisation means comprise a display or screen on which a human readable message containing the result of the evaluation can be displayed. It seems clear that any suitable "signalisation means" or even combinations thereof can be used, such as visual, acoustic or vibration signals.

The device is either a "stand-alone" device with all the necessary (and possibly one or more optional) features or it is arranged to be used in connection with a further device providing some of the required or optional features or it may even be completely integrated into another device or apparatus to supplement the latter with the PUF authentication features of the invention. Preferably, the device is operationally connectable to a smartphone such that (part of) the hardware and software of the smartphone can be used e.g. for displaying and/or for wireless communication. As a further preferred alternative, the device is operationally integrated into a smartphone, thereby provided all the usual functions of a smartphone, but supplemented by PUF authentication as described herein.

It is to be noted that the term smartphone as used herein is to be interpreted largely, i.e. as referring to any hand-held mobile communication device with a display, generally but not necessarily a touch sensitive screen, and encompasses mobile (cellular) phones, tablets, laptop/notebook computers, or other mobile devices with appropriate computational power and wireless communication capabilities.

In a further aspect, the invention also provides a method for identifying genuine and counterfeited goods using challenge-response pairs (CRP) based on physical unclonable function (PUF), said method comprising the steps of:
a) emitting a first electromagnetic signal as a challenge to a good embodying a PUF, wherein the first electromagnetic signal is produced by a software defined radio (SDR) unit, which is capable of receiving and transmitting in various radio technologies in different frequencies, and emitted through a wideband antenna
b) receiving a second electromagnetic signal as a response, wherein said second electromagnetic signal is received by said software defined radio (SDR) unit through a wideband antenna,
   wherein both challenge and response form a challenge-response pair,
c) evaluating said challenge-response pair to determine if the good is genuine or counterfeit, and
d) providing the result of the evaluation of step (c),
   method wherein the challenge-response pair(s) is/are updatable.

As already described above, the first electromagnetic signal(s) are preferably defined by programmable PUF algorithms to be executed by the software defined radio.

In some embodiments of the method, steps (a) to (d) are effected within a single device based on hardware, software and information stored therein, also called decentralised mode.

In alternative embodiments of the method, only steps (a) and (b) are effected within a single device based on hardware, software and information stored therein, whereas step (c) is effected remotely on a remote authentication server and the result of step (d) is transmitted to the device, also called centralised mode herein.

In further embodiments, both centralised and decentralised modes may be combined if desired or necessary as described above.

Hence, in an additional aspect, the invention also concerns a device or a plurality of interconnected (identical or different) devices being arranged for implementing the method described herein.

The invention also concerns a computer program product, having computer executable instructions for causing a programmable device, preferably a device as described herein, optionally connected (or connectable) to further devices, such as a remote authentication server, to execute the method described herein, alone or in combination with said further devices.

A further aspect of the invention is a computer-readable medium, having stored therein/thereon data or information representing instructions executable by a programmed processor, the computer-readable medium comprising instructions for causing a programmable device, preferably a device as described herein, optionally connected (or connectable) to further devices, such as a remote authentication server, to execute the method as described herein, alone or in combination with said further devices.

In a still further aspect, the invention also proposes the use of a device as described herein or the use of a method as described herein for detecting known counterfeited goods and for tracking or tracing such counterfeited goods which can be useful to follow counterfeited goods, to collect evidence on sale channels for legal actions, etc.

### Brief Description of the Drawings

Preferred embodiments of the invention will now be described, by way of example, with reference to the accompanying drawings in which:
Fig. 1 is a schematic representation of a preferred framework of the present invention;
Fig. 2 is a schematic view of an embodiment of a preferred SDR PUF reader.

### Description of Preferred Embodiments

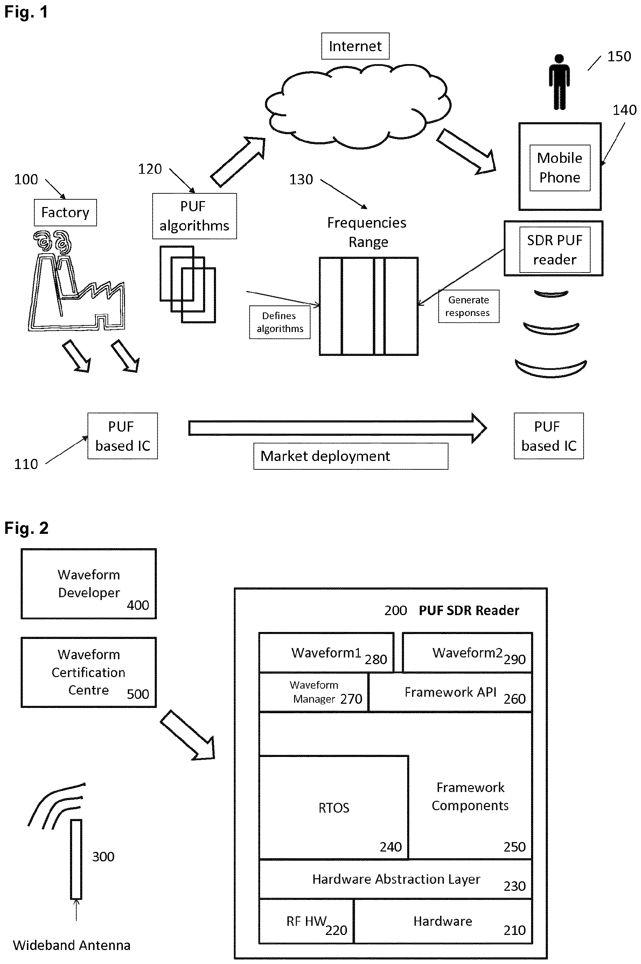

Fig.1 describes an example of the overall framework 10 of a preferred embodiment of the present invention.

The factory 100 of a good, such as a PUF based integrated circuit IC 110, implements a specific PUF in the IC (or in other devices, e.g. RFIDs, etc.). In the goods factory 100, the challenge and response pairs are determined, tested and validated for accuracy. Because SDR PUF readers are used, the algorithms 120 of PUF validation can be implemented at different frequencies 130 to enlarge the space of the challenge-response pairs and to mitigate the risk the PUF could be cloned. A device or reader according to the present invention makes it virtually impossible to clone a good to make it react as if it were genuine, even if some responses to determined challenges could be mimicked, because the material will behave (respond) differently from the genuine good at other frequencies.

The algorithms 120 can be embedded in a waveform to be distributed to the SDR PUF reader 140 through a secure channel. Various techniques and algorithms can be used for the secure distribution of the waveform. A survey of the security threats and the potential techniques to ensure secure download and activation of applications is provided e.g. in Becher, M.; Freiling, F.C.; Hoffmann, J.; Holz, T.; Uellenbeck, S.; Wolf, C., "Mobile Security Catching Up ? Revealing the Nuts and Bolts of the Security of Mobile Devices", Security and Privacy (SP), 2011 IEEE Symposium, vol. no., pp.96-111, 22-25 May 2011.

In some embodiments SDR PUF reader 140 is a dedicated hand-held device integrating among others a SDR. In other embodiments the SDR of the SDR PUF reader 140 can be an additional module to be connected to a smartphone or easily integrated within a smartphone.

Once a user 150 wants to verify that a good is valid, the SDR module e.g. in the smartphone is used to create the challenge and to analyse the response from the PUF embedded or equipped good (e.g., in this example a PUF based IC). The SDR module can generate different challenges and analyse different responses in a short timeframe, based on the computational power of modern smartphones and their capability to process even sophisticated signal processing algorithms.

A SDR based device, such as a SDR based smartphone, can also be used to detect and report to the factory 100 the identification of counterfeit PUF goods. This is an additional advantage of preferred aspects of the present invention. Furthermore, the SDR PUF reader 140 may also be configured to collect statistics on the robustness of a PUF algorithm (e.g., number of false alarms) to further improve the design of the PUF algorithms used.

In case of a successful breach of a PUF algorithm, the following steps can for example be executed to adopt new algorithms for counterfeiting:
1. A counterfeited object or good is detected either by the SDR based PUF reader or by other means. A new algorithm needs to be defined.
2. The factory 100 decides to implement a new PUF algorithm 120 for the new PUF based products 110 and a new PUF implementation. In an alternative scenario, the factory 100 may decide to not implement a new PUF but just create a new challenge/response with different parameters/modulation or different frequencies 130.
3. The new PUF algorithm 120 is distributed to all the PUF readers 140 through a secure downloading as described herein.
4. The new PUF algorithm 120 is activated on the PUF readers 140.

Fig. 2 shows an example of the overall architecture of a preferred PUF SDR reader.

A PUF SDR reader 200 can be implemented using different hardware 210 platforms. The details of the hardware 210 components are hidden behind the hardware abstraction layer 230 (HAL) so that common code for implementing the challenge-response can be used in readers with different hardware 210 implementations. The SDR framework components 250 and Real Time Operating System 240 (RTOS) support the execution of a waveform, which implements specific challenge/responses with the good (equipped with PUF) to be evaluated. It is to be noted that a reader 200 can carry more than one waveform to support compatibility issues, where goods can still use old PUFs of different PUFs.

The architecture preferably supports two modes of operation, centralized or decentralized. In the centralized mode, the SDR reader 200 sends the challenges to the PUF, retrieves the responses and sends them back to the central server through Internet for their authentication. This mode of operation requires permanent (or at least ad hoc) connectivity to the Internet (such as with embedded WiFi or 3G/GPRS), but it is very resistant to reverse engineering attempts, since the authentication of the responses do not take place within the SDR reader.

In the decentralized mode, the reader is loaded with the set of waveforms (challenges) and algorithms to authenticate the responses, and it is able to operate autonomously without Internet connectivity. The manufacturer sets a centralized server online where the updates of counterfeiting-detection algorithms (i.e. the SDR challenge-responses authentication algorithms) are periodically published. The Internet connectivity is only required for the update of the challenges and response authentication algorithms, and, eventually, to report to the manufacturer data about a discovered counterfeited object.

The communication between the SDR reader 200 and the central server 500, for both modes of operation, uses a secure channel such as based on SSL (HTTPS) and a public-key infrastructure (PKI) which might either make use of a public set of root certificate authorities (CA) or a private one. The connection to the central server 500 is initiated by the reader device 200, which will periodically poll the remote server 500 to check if updates are available. Two-way SSL is preferably employed for the mutual authentication of the server 500 and the reader device 200. Each reader device preferably contains a SSL client certificate signed, and the root CA of the PKI. The usage of intermediate CAs is preferably supported and even recommended.

In the centralized mode, the above mentioned security system protects the client-server communications used for the reception of challenges and authentication of responses. If a client certificate or a set of certificates are compromised, they can be revoked at the server side and they will no longer be allowed to connect.

In the decentralized mode, the waveform distributed by the server to the readers will be, in addition the two-way secure socket layer (SSL) channel security, signed at the server side by a trusted CA (either directly by the root CA trusted by the reader, or by an intermediate CA of the chain of trust), providing end-to-end authentication. The waveform manager 270 in the PUF SDR reader 200 is responsible for checking the validity of the waveform distributed to the reader. If the signature is valid, the new waveform is installed and activated on the reader. Through the framework 250 and the HAL 230, the waveform will issue new type of challenges to the PUF and it will analyse different type of responses.

In addition to developing new waveforms implementing new challenge/responses in response to a security breach, it is also possible to create a set of challenge/responses aimed at already detected known counterfeited products increasing the robustness of the solution and allowing tracking the source of counterfeited products.

In order to cover a wide range of frequencies and allow for the creating of a big variety of challenges and responses, the PUF SDR reader should be equipped with a RF HW 220 (ADC/DAC, amplifiers, filters) and with an antenna 300, which must be able to cover a large range of frequencies: ideally all the frequencies where the challenges and responses operate. An example is the SATIMO SH400, which operates in the 0.4 - 6 GHz frequency band.

To facilitate, the development of the waveforms by the waveform developer, a development kit can be created with the most important "blocks", which can be used to develop the challenge and to analyse the response. For example, some blocks could be the modulation scheme (QAM, QPSK), the frequency, the transmitted power and so on. The new algorithms defined by the PUF manufacturing plant can be composed using existing blocks and/or new blocks.

As described before, a PUF reader 200 can, and it is recommended to carry more than one waveform 280, 290 in order to increase the robustness and allow for the interoperability with old PUFs. If a PUF does not react to a specific waveform, it may be an old model. The reader can deactivate and re-activate an old waveform to test if the PUF is indeed an old model. This is a further feature, which would not be possible with a PUF reader only based on hardware components. In both the centralized and decentralized modes of operation, the model of the PUF being read can be easily fingerprinted by sending several challenges and analysing the responses, in such a way that the authentication based on the responses is performed accordingly to the model being read.

### Legend:

- 10: Overall framework
- 100: Goods factory
- 110: PUF based IC
- 120: PUF algorithms
- 130: Frequencies ranges
- 140: SDR PUF reader (device)
- 150: User
- 20: Overall architecture
- 200: SDR PUF reader (device)
- 210: Hardware
- 220: RF hardware
- 230: Hardware abstraction layer HAL
- 240: Real time operating system RTOS
- 250: Framework components
- 260: Framework application programming interface (API)
- 270: Waveform manager
- 280: Waveform 1
- 290: Waveform 2
- 300: Wideband antenna
- 400: Waveform developer
- 500: Waveform certification centre

## Claims

1. A reader device (200) for identifying genuine and counterfeited goods using challenge-response pairs (CRP) based on physical unclonable function (PUF), said reader device (200) comprising:
one or more antennae (300) for emitting a number of first electromagnetic signals as challenges to a good (110) embodying a PUF and for receiving a number of second electromagnetic signals as responses from the good embodying said PUF, both challenge and response forming a challenge-response pair for said good embodying said PUF, wherein at least one of the antennae (300) is a wideband antenna,
a software defined radio (SDR) unit (250), capable of receiving and transmitting in various radio technologies in different frequencies, arranged for emitting said first electromagnetic signal or signals as challenge or challenges and arranged for receiving said second electromagnetic signal or signals as response or responses, wherein the first electromagnetic signal or signals are defined by programmable PUF validation algorithms (120) to be executed by the software defined radio unit (250) at different frequencies,
the reader device (200) being configurable with updated challenge-response pairs,
means for wireless communication with a remote update server for updating the software of the software defined radio unit (250), and
a challenge-response pair evaluation unit (240-270) for analysing said challenge-response pair or pairs and to provide a result acknowledging if the good embodying said PUF is genuine or counterfeit.

2. The reader device according to claim 1, wherein the reader device further comprises means for wireless communication with a remote update server for updating the programmable PUF algorithms (120).

3. The device according to claim 1 or 2, wherein the reader device further comprises means for wireless communication with a remote update server for updating the challenge-response pair authentication information.

4. The reader device according to any one of claims 1 to 3, wherein the reader device (200) is arranged for centralised use and wherein the challenge-response pair evaluation unit (240-270) delegates the evaluation of the challenge-response pair or pairs to a remote authentication server (500) based on challenge-response pair authentication information stored on said remote authentication server.

5. The reader device according to any one of claims 1 to 4, wherein the device is arranged for decentralised authentication and wherein the challenge-response pair evaluation unit (240-270) effects the evaluation of the challenge-response pair or pairs based on authentication information stored within the reader device (200).

6. The reader device according to any one of the preceding claims, further comprising signalisation means (140) for notifying the result provided by challenge-response pair evaluation unit, preferably the signalisation means comprise a display or screen.

7. The reader device according to any one of the preceding claims, wherein the reader device (200) is operationally connectable to a smartphone (140) or is operationally integrated into a smartphone (140).

8. A method for identifying genuine and counterfeited goods using challenge-response pairs (CRP) based on physical unclonable function (PUF) using a reader device (200), the reader device (200) including a software defined radio (SDR) unit (250), said method comprising the steps of:
aa) wirelessly communicating with a remote update server for updating the software of the software defined radio unit (250),
a) emitting from the reader device (200) a first electromagnetic signal as a challenge to a good embodying a PUF, wherein the first electromagnetic signal is produced by the software defined radio unit (250), which is capable of receiving and transmitting in various radio technologies in different frequencies and emitted through a wideband antenna, wherein the first electromagnetic signal or signals are defined by programmable PUF validation algorithms (120) to be executed by the software defined radio unit (250) at different frequencies,
b) receiving at the reader device (200) a second electromagnetic signal as a response, wherein said second electromagnetic signal is received by said software defined radio unit (250) through a wideband antenna, wherein both challenge and response form a challenge-response pair, said challenge-response pair being updatable,
c) evaluating said challenge-response pair to determine if the good embodying said PUF is genuine or counterfeit, and
d) providing the result of the evaluation of step (c).

9. The method according to claim 8, wherein the first electromagnetic signal or signals are defined by programmable PUF algorithms (120) to be executed by the software defined radio unit (250).

10. The method according to claim 8 or 9, wherein steps (a) to (d) are effected within a single reader device (200) based on hardware, software and information stored therein.

11. The method according to claim 8 or 9, wherein steps (a) and (b) are effected within a single reader device (200) based on hardware, software and information stored therein, whereas step (c) is effected remotely on a remote authentication server (500) and the result of step (d) is transmitted to the reader device (200).

12. A computer program product, having computer executable instructions for causing a programmable device, preferably a device according to any of claims 1 to 7, to execute the method according to any of claims 8 to 11.

13. A computer-readable medium, having stored therein data representing instructions executable by a programmed processor, the computer-readable medium comprising instructions for causing a programmable device, preferably a device according to any of claims 1 to 7, to execute the method according to any of claims 8 to 11.

14. An arrangement comprising a reader device (200) according to any of the claims 1 to 7, a remote update server, an authentication server (500) and/or a smartphone (140), wherein the device, server(s) and/or smartphone are interconnected and arranged for implementing the method according to any of claims 8 to 11.

15. Use of a device according to claims 1 to 7 or of a method according to claims 8 to 11 for detecting known counterfeited goods and for tracking such counterfeited goods.

## Patentansprüche

1. Eine Lesevorrichtung (200) zum Identifizieren echter und gefälschter Güter unter Verwendung von Challenge-Response-Paaren (CRP) auf Grundlage physikalisch unklonbarer Funktion (PUF), wobei die erwähnte Lesevorrichtung Folgendes umfasst:
eine oder mehrere Antennen (300) zum Aussenden einer Anzahl erster elektromagnetischer Signale als Challenges zu einem Gut (110), welches eine PUF enthält, und zum Empfangen einer Anzahl zweiter elektromagnetischer Signale als Responses vom Gut, das die erwähnte PUF enthält, wobei die Challenge und die Response ein Challenge-Response-Paar für das erwähnte Gut, das die erwähnte PUF enthält, bilden, wobei zumindest eine der Antennen (300) eine Breitbandantenne ist,
eine Software-Defined-Radio-(SDR)-Einheit (250), in der Lage, in verschiedenen Funktechnologien in verschiedenen Frequenzen zu empfangen und zu senden, angeordnet, um das bzw. die erwähnte(n) erste(n) elektromagnetische(n) Signal oder Signale als Challenge oder Challenges auszusenden, und angeordnet, um das bzw. die erwähnte(n) zweite(n) elektromagnetische(n) Signal oder Signale als Response oder Responses zu empfangen, wobei das bzw. die erste(n) elektromagnetische(n) Signal oder Signale durch programmierbare PUF-Validierungsalgorithmen (120) definiert ist bzw. sind, die durch die Software-Defined-Radio-Einheit (250) bei verschiedenen Frequenzen ausgeführt werden sollen,
die Lesevorrichtung (200), welche mit aktualisierten Challenge-Response-Paaren konfigurierbar ist,
Mittel zur drahtlosen Kommunikation mit einem Fernupdate-Server zum Aktualisieren der Software der Software-Defined-Radio-Einheit (250), und
eine Challenge-Response-Paar-Beurteilungseinheit (240-270) zum Analysieren des bzw. der erwähnten Challenge-Response-Paars oder -Paare und zum Liefern eines Ergebnisses, welches bestätigt, ob das Gut, welches die erwähnte PUF enthält, echt oder gefälscht ist.

2. Die Lesevorrichtung nach Anspruch 1, wobei die Lesevorrichtung ferner Mittel zur drahtlosen Kommunikation mit einem Fernupdate-Server zum Aktualisieren der programmierbaren PUF-Algorithmen (120) umfasst.

3. Die Vorrichtung nach Anspruch 1 oder 2, wobei die Lesevorrichtung ferner Mittel zur drahtlosen Kommunikation mit einem Fernupdate-Server zum Aktualisieren der Authentifizierungsinformation des Challenge-Response-Paares umfasst.

4. Die Lesevorrichtung nach irgendeinem der Ansprüche 1 bis 3, wobei die Lesevorrichtung (200) zur zentralisierten Anwendung angeordnet ist und wobei die Challenge-Response-Paar-Beurteilungseinheit (240-270) die Beurteilung des bzw. der Challenge-Response-Paares oder -Paare an einen Fernauthentifizierungsserver (500) auf Grundlage von Challenge-Response-Paar-Authentifizierungsinformation, die auf dem erwähnten Fernauthentifizierungsserver gespeichert ist, überträgt.

5. Die Lesevorrichtung nach irgendeinem der Ansprüche 1 bis 4, wobei die Vorrichtung zur dezentralisierten Authentifizierung angeordnet ist und wobei die Challenge-Response-Paar-Beurteilungseinheit (240-270) die Beurteilung des bzw. der Challenge-Response-Paares oder -Paare auf Grundlage von Authentifizierungsinformation durchführt, die auf der Lesevorrichtung (200) gespeichert ist.

6. Die Lesevorrichtung nach irgendeinem der vorigen Ansprüche, welche ferner Anzeigemittel (140) zum Mitteilen des Ergebnisses umfasst, welches durch die Challenge-Response-Paar-Beurteilungseinheit geliefert wurde, wobei die Anzeigemittel bevorzugt ein Display oder einen Bildschirm umfassen.

7. Die Lesevorrichtung nach irgendeinem der vorigen Ansprüche, wobei die Lesevorrichtung (200) betrieblich mit einem Smartphone (140) verbunden werden kann oder betrieblich in ein Smartphone (140) integriert ist.

8. Ein Verfahren zum Identifizieren echter und gefälschter Güter unter Verwendung von Challenge-Response-Paaren (CRP) auf Grundlage physikalisch unklonbarer Funktion (PUF) unter Verwendung einer Lesevorrichtung (200), wobei die Lesevorrichtung (200) eine Software-Defined-Radio-Einheit (250) einschließt, wobei das erwähnte Verfahren folgende Schritte umfasst:
aa) drahtloses Kommunizieren mit einem Fernupdate-Server zum Aktualisieren der Software der Software-Defined-Radio-Einheit (250),
a) Aussenden von der Lesevorrichtung (200) eines ersten elektromagnetischen Signals als eine Challenge zu einem Gut, das eine PUF enthält, wobei das erste elektromagnetische Signal durch die Software-Defined-Radio-Einheit (250) erzeugt wird, welche in der Lage ist, in verschiedenen Funktechnologien in verschiedenen Frequenzen und ausgesendet durch eine Breitbandantenne zu empfangen und zu senden, wobei das bzw. die erste(n) elektromagnetische(n) Signal oder Signale durch programmierbare PUF-Validierungsalgorithmen (120) definiert sind, die durch die Software-Defined-Radio-Einheit (250) bei verschiedenen Frequenzen ausgeführt werden sollen,
b) Empfangen an der Lesevorrichtung (200) eines zweiten elektromagnetischen Signals als eine Response, wobei das erwähnte zweite elektromagnetische Signal durch die erwähnte Software-Defined-Radio-Einheit (250) durch eine Breitbandantenne empfangen wird, wobei die Challenge und die Response ein Challenge-Response-Paar bilden, wobei das erwähnte Challenge-Response-Paar aktualisierbar ist,
c) Beurteilen des erwähnten Challenge-Response-Paares, um zu bestimmen, ob das Gut, welches die erwähnte PUF enthält, echt oder gefälscht ist, und
d) Bereitstellen des Ergebnisses des Beurteilungsschrittes (c).

9. Das Verfahren nach Anspruch 8, wobei das bzw. die erste(n) elektromagnetische(n) Signal oder Signale durch programmierbare PUF-Algorithmen (120) definiert sind, die durch die Software-Defined-Radio-Einheit (250) ausgeführt werden sollen.

10. Das Verfahren nach Anspruch 8 oder 9, wobei die Schritte (a) bis (d) in einer einzigen Lesevorrichtung (200) ausgeführt werden, basierend auf Hardware, Software und darin gespeicherter Information.

11. Das Verfahren nach Anspruch 8 oder 9, wobei die Schritte (a) und (b) in einer einzigen Lesevorrichtung (200) ausgeführt werden, basierend auf Hardware, Software und darin gespeicherter Information, während Schritt (c) entfernt auf einem Fernauthentifizierungsserver (500) ausgeführt wird und das Ergebnis von Schritt (d) an die Lesevorrichtung (200) übertragen wird.

12. Ein Produkt eines Computerprogramms mit computerausführbaren Anweisungen, um eine programmierbare Vorrichtung, bevorzugt eine Vorrichtung nach irgendeinem der Ansprüche 1 bis 7, zu veranlassen, das Verfahren nach irgendeinem der Ansprüche 8 bis 11 auszuführen.

13. Ein computerlesbares Medium, mit darin gespeichert Daten, welche Anweisungen repräsentieren, die durch einen programmierten Prozessor ausführbar sind, wobei das computerlesbare Medium Anweisungen umfasst, um eine programmierbare Vorrichtung, bevorzugt eine Vorrichtung nach irgendeinem der Ansprüche 1 bis 7, zu veranlassen, das Verfahren nach irgendeinem der Ansprüche 8 bis 11 auszuführen.

14. Eine Anordnung, welche eine Lesevorrichtung (200) nach irgendeinem der Ansprüche 1 bis 7 umfasst, einen Fernupdate-Server, einen Authentifizierungsserver (500) und/oder ein Smartphone (140), wobei die Vorrichtung, der bzw. die Server und/oder das Smartphone miteinander verbunden und angeordnet sind, um das Verfahren nach irgendeinem der Ansprüche 8 bis 11 umzusetzen.

15. Einsatz einer Vorrichtung nach den Ansprüchen 1 bis 7 oder eines Verfahrens nach den Ansprüchen 8 bis 11 zum Erkennen bekanntermaßen gefälschter Güter und zum Aufspüren solcher gefälschten Güter.

## Revendications

1. Dispositif de lecture (200) pour identifier des marchandises authentiques et contrefaites au moyen de paires question-réponse (CRP) basées sur une fonction physique non clonable (PUF), ledit dispositif de lecture (200) comprenant :
une ou plusieurs antennes (300) pour émettre un certain nombre de premiers signaux électromagnétiques en tant que questions vers une marchandise (110) incorporant un PUF et pour recevoir un certain nombre de seconds signaux électromagnétiques en tant que réponses de la part de la marchandise incorporant ledit PUF, la question et la réponse formant toutes deux une paire question-réponse pour ladite marchandise incorporant ledit PUF, dans lequel au moins l'une des antennes (300) est une antenne à large bande,
une unité radio logicielle (SDR) (250) capable de recevoir et d'émettre dans diverses technologies radio dans différentes fréquences, conçue pour émettre ledit ou lesdits premiers signaux électromagnétiques en tant que question ou questions et conçue pour recevoir ledit ou lesdits seconds signaux électromagnétiques en tant que réponse ou réponses, dans lequel le ou les premiers signaux électromagnétiques sont définis par des algorithmes de validation de PUF programmables (120) devant être exécutés par l'unité radio logicielle (250) à différentes fréquences,
le dispositif de lecture (200) étant configurable avec des paires question-réponse mises à jour,
des moyens pour assurer la communication sans fil avec un serveur de mise à jour distant pour mettre à jour le logiciel de l'unité radio logicielle (250), et
une unité d'évaluation de paires question-réponse (240-270) pour analyser ladite ou lesdites paires question-réponse et pour produire un résultat confirmant si la marchandise incorporant ledit PUF est authentique ou contrefaite.

2. Dispositif de lecture selon la revendication 1, dans lequel le dispositif de lecture comprend en outre des moyens pour assurer la communication sans fil avec un serveur de mise à jour distant pour mettre à jour les algorithmes PUF programmables (120).

3. Dispositif selon la revendication 1 ou 2, dans lequel le dispositif de lecture comprend en outre des moyens pour assurer la communication sans fil avec un serveur de mise à jour distant pour mettre à jour les informations d'authentification de paires question-réponse.

4. Dispositif de lecture selon l'une quelconque des revendications 1 à 3, dans lequel le dispositif de lecture (200) est conçu pour une utilisation centralisée et dans lequel l'unité d'évaluation de paires question-réponse (240-270) délègue l'évaluation de la ou des paires question-réponse à un serveur d'authentification distant (500) sur la base d'informations d'authentification de paires question-réponse stockées sur ledit serveur d'authentification distant.

5. Dispositif de lecture selon l'une quelconque des revendications 1 à 4, dans lequel le dispositif est conçu pour une authentification décentralisée et dans lequel l'unité d'évaluation de paires question-réponse (240-270) effectue l'évaluation de la paire ou des paires question-réponse sur la base d'informations d'authentification stockées à l'intérieur du dispositif de lecture (200).

6. Dispositif de lecture selon l'une quelconque des revendications précédentes, comprenant en outre des moyens de signalisation (140) pour notifier le résultat fourni par l'unité d'évaluation de paires question-réponse, les moyens de signalisation comprenant de préférence un dispositif d'affichage ou écran.

7. Dispositif de lecture selon l'une quelconque des revendications précédentes, dans lequel le dispositif de lecture (200) peut être connecté opérationnellement à un téléphone intelligent (140) ou est intégré opérationnellement dans un téléphone intelligent (140).

8. Procédé pour identifier des marchandises authentiques et contrefaites au moyen de paires question-réponse (CRP) basées sur une fonction physique non clonable (PUF) au moyen d'un dispositif de lecture (200), le dispositif de lecture (200) incluant une unité radio logicielle (SDR) (250), ledit procédé comprenant les étapes suivantes :
aa) communication sans fil avec un serveur de mise à jour distant pour mettre à jour le logiciel de l'unité radio logicielle (250),
a) émission à partir du dispositif de lecture (200) d'un premier signal électromagnétique en tant que question vers une marchandise incorporant un PUF, le premier signal électromagnétique étant produit par l'unité radio logicielle (250), qui est capable de recevoir et d'émettre dans diverses technologies radio dans différentes fréquences et émis par le biais d'une antenne à large bande, le ou les premiers signaux électromagnétiques étant définis par des algorithmes de validations de PUF programmables (120) devant être exécutés par l'unité radio logicielle (250) à différentes fréquences,
b) réception au niveau du dispositif de lecture (200) d'un second signal électromagnétique en tant que réponse, dans lequel ledit second signal électromagnétique est reçu par ladite unité radio logicielle (250) par le biais d'une antenne à large bande, la question et la réponse formant toutes deux une paire question-réponse, ladite paire question-réponse pouvant être mise à jour,
c) évaluation de ladite paire question-réponse pour déterminer si la marchandise incorporant ledit PUF est authentique ou contrefaite, et
d) fourniture du résultat de l'évaluation de l'étape (c).

9. Procédé selon la revendication 8, dans lequel le ou les premiers signaux électromagnétiques sont définis par des algorithmes PUF programmables (120) devant être exécutés par l'unité radio logicielle (250).

10. Procédé selon la revendication 8 ou 9, dans lequel les étapes (a) à-(d) sont effectuées à l'intérieur d'un seul dispositif de lecture (200) sur la base d'un matériel, d'un logiciel et d'informations stockées à l'intérieur.

11. Procédé selon la revendication 8 ou 9, dans lequel les étapes (a) et (b) sont effectuées à l'intérieur d'un seul dispositif de lecture (200) sur la base d'un matériel, d'un logiciel et d'informations stockées à l'intérieur, tandis que l'étape (c) est effectuée à distance ou sur un serveur d'authentification distant (500) et le résultat de l'étape (d) est transmis au dispositif de lecture (200).

12. Produit de programme informatique, ayant des instructions exécutables par ordinateur pour amener un dispositif programmable, de préférence un dispositif selon l'une quelconque des revendications 1 à 7 à exécuter le procédé selon l'une quelconque des revendications 8 à 11.

13. Support lisible par ordinateur, sur lequel sont stockées des données représentant des instructions exécutables par un processeur programmé, le support lisible par ordinateur comprenant des instructions pour amener un dispositif programmable, de préférence un dispositif selon l'une quelconque des revendications 1 à 7, à exécuter le procédé selon l'une quelconque des revendications 8 à 11.

14. Agencement comprenant un dispositif de lecture (200) selon l'une quelconque des revendications 1 à 7, un serveur de mise à jour distant, un serveur d'authentification (500) et/ou un téléphone intelligent (140), dans lequel le dispositif, le(s) serveur(s) et/ou le téléphone intelligent sont interconnectés et conçus pour mettre en oeuvre le procédé selon l'une quelconque des revendications 8 à 11.

15. Utilisation d'un dispositif selon les revendications 1 à 7 ou d'un procédé selon les revendications 8 à 11 pour détecter des marchandises contrefaites connues et assurer le suivi de ces marchandises contrefaites.
